# EUROPÄISCHE PATENTSCHRIFT

(11) **EP 1 034 955 B1**
(45) Veröffentlichungstag und Bekanntmachung des Hinweises auf die Patenterteilung: **09.03.2005**
(21) Anmeldenummer: 99125163.8
(22) Anmeldetag: 17.12.1999
(51) Int. Cl.: B60J 7/20

(54) **Cabriolet-Fahrzeug mit abnehmbarer Persenning als Verdeckhülle**
Convertible vehicle provided with a removable tarpaulin as top cover
Voiture convertible équipée d'une bache amovible pour la couverture du toit pliant

(30) Priorität: 08.03.1999 DE 19910061
(43) Veröffentlichungstag der Anmeldung: 13.09.2000
(73) Patentinhaber: AUDI AG, 85045 Ingolstadt (DE)
(72) Erfinder: Alliger, Michael, 85080 Gaimersheim (DE); Twest, Joachim, 85080 Gaimersheim (DE); Heiss, Josef, 91809 Wellheim (DE); Haverkamp, Claus, 85095 Denkendorf (DE)
(74) Vertreter: Engelhardt, Harald

(56) Entgegenhaltungen:
- US-A- 3 154 341
- US-A- 4 679 844
- US-A- 4 971 385

## Beschreibung

Die Erfindung betrifft ein Cabriolet-Fahrzeug mit abnehmbarer Persenning als Verdeckhülle zur Abdeckung eines geöffneten Cabrioletdachs.

Cabriolets oder zweisitzige, sportliche Roadster sind allgemein mit nach hinten klappbaren Faltdächem bekannt. Es sind auch Ausführungen mit insgesamt nach hinten klappbaren Festdächern oder Ausführungen mit Festdächern bekannt, die in Teilbereichen aufeinanderfalten und nach hinten klappbar sind.

Insbesondere bei klappbaren Faltdächern ist es bekannt, zur Abdeckung des Gestänges und des gefalteten Dachs eine gattungsgemäße, abnehmbare Persenning als Verdeckhülle zu verwenden. Eine solche Abdeckung durch eine Persenning hat einerseits eine Schutzwirkung für das gefaltete Dach gegen Verschmutzungen und gegen eine Beschädigung durch den Fahrtwind und verbessert andererseits die Optik des Fahrzeugs bei geöffnetem Dach.

Dazu hat eine solche Persenning eine etwa U-förmige Gestalt, bestehend aus einem Mittelteil für eine Querabdeckung des geöffneten Cabrioletdachs in einem Heckbereich und mit beidseitig als U-Schenkel nach vorne gerichteten Seitenteilen, die jeweils einen Seitenbereich bis über eine auf Fensterbrüstungshöhe verkürzte B-Säule des Fahrzeugaufbaus abdecken. Eine abnehmbare Persenning besteht in allgemein bekannter Weise aus einem relativ festen, segeltuchartigen Material und weist persenningseitige Halteelemente, insbesondere Druckknöpfe, auf, die zusammen mit zugeordneten, karosserieseitigen Halteelementen eine lösbare Verbindung zwischen Persenning und Fahrzeugaufbau ergeben.

Eine solche Halterung der Persenning im montierten Zustand kann von unbefugten Personen gelöst werden, wodurch einerseits die Sicherheit einem darauffolgenden Fahrbetrieb beeinträchtigt sein kann und zudem die Möglichkeit eines Diebstahls der Persenning besteht. Zudem ist die Montage und Demontage der Persenning durch die erforderliche Betätigung einer Mehrzahl von Halteelementen aufwendig. Zudem ist eine Tuchpersenning nur bei gut gespannter Montage optisch ansehnlich und ohne wiangenehme Fahrgeräusche zu benutzen. Eine Tuchpersenning ist wegen ihrer unregelmäßigen Form auch im abgenommenen Zustand unhandlich und wird regelmäßig in einem unansehnlichen und platzraubenden Knäuel im Fahrzeug mitgeführt.

Aufgabe der Erfindung ist es, die Halteeinrichtung für eine abnehmbare Persenning hinsichtlich ihrer Haltefunktion und der Handhabung zu verbessern.

Diese Aufgabe wird mit den Merkmalen des Anspruchs 1 gelöst.

Gemäß Anspruch 1 ist jeweils im vorderen Bereich der Seitenteile, der im montierten Zustand der Persenning die zugeordnete verkürzte B-Säule abdeckt, ein nach unten abstehender Verriegelungszapfen angebracht. An der Oberseite der B-Säule ist eine Ausnehmung zur Einführung des Verriegelungszapfens vorgesehen. In der B-Säule ist eine durch ein Betätigungselement von Hand steuerbare Verriegelungseinrichtung zur lösbaren Verriegelung des eingeführten Verriegelungszapfens enthalten. Das Betätigungselement ist dabei an der durch eine geschlossene Fahrzeugtür abgedeckten Türausschnitt-Innenwange der B-Säule angeordnet.

Durch eine Verriegelungseinrichtung in der B-Säule in Verbindung mit einem Verriegelungszapfen an der Persenning wird jeweils der vordere Bereich der Seitenteile der Persenning stabil an der B-Säule befestigt. Damit ist ein unbeabsichtigtes Lösen der Persenning auch bei hohen Fahrzeuggeschwindigkeiten sicher ausgeschlossen. Betätigbare Verriegelungseinrichtungen sind dem Fachmann in unterschiedlichen Ausführungsformen bekannt. Die Betätigung, insbesondere eine Entriegelung solcher Verriegelungseinrichtungen, ist bequem und einfach ohne Kraftaufwand durchführbar.

Besonders vorteilhaft ist die vorgeschlagene Anbringung des Betätigungselements an der Türausschnitt-Innenwange der B-Säule. Bei geschlossener Fahrzeugtür ist damit das Betätigungselement abgedeckt. Dies führt einerseits dazu, daß im Fahrbetrieb bei geschlossener Fahrzeugtür eine unbeabsichtigte oder willkürliche Betätigung des Betätigungselements und eine damit verbundene Lösung der Persenning ausgeschlossen ist. Zudem wird die Persenning beim Verlassen eines Fahrzeugs und beim Absperren der Fahrzeugtüren gegen unbefugte Manipulationen und gegen einen Diebstahl gesichert, da dann die Betätigungselemente wegen der abgesperrten Fahrzeugtüren nicht zugänglich sind.

In einer bevorzugten, konkreten Ausführungsform nach Anspruch 2 enthält der Verriegelungszapfen ein Fallenprofil, vorzugsweise einen Durchbruch zum Eingriff einer Riegelnase eines Riegels der Verriegelungseinrichtung. Das Fallenprofil weist eine Abstützkante für eine Abstützung der Riegelnase entgegen der Auszugrichtung des Verriegelungszapfens auf, so daß bei entsprechender Anbringung der Abstützkante der Verriegelungszapfen und damit die Persenning in einer gewünschten Position montierbar und gehalten sind.

In einer vorteilhaften Weiterbildung nach Anspruch 3 ist der Riegel in seine Geschlossenstellung federvorgespannt und der Riegelnase ist eine in Einführrichtung des Verriegelungszapfens weisende Einführschräge zugeordnet. Damit wird die Montage der Persenning im Bereich der B-Säulen wesentlichen vereinfacht, da lediglich die Persenning mit den Verriegelungszapfen in die Ausnehmungen der B-Säulen eingesteckt werden muß. Durch einfaches Drücken auf diese Bereiche rastet dann der federbelastete Riegel in die Fallenprofile der Verriegelungszapfen selbsttätig ein.

Bei einer solchen Anordnung kann nach Anspruch 4 das Betätigungselement für eine Entriegelung einfach als federvorgespanntes Tastelement mit einem Druckknopf und einem angeschlossenen Stößel ausgeführt werden. Bei einer Druckknopfbetätigung entgegen dieser Federvorspannung ist dann der Riegel durch den Stößel in seine Entriegelungsposition überführbar. Für eine Federvorspannung des Tastelements kann eine separate Feder und/oder ggfs. auch die Federvorspannung des Riegels verwendet oder zumindest mitverwendet werden.

Eine kompakte und einfache Konstruktion ergibt sich nach Anspruch 5 bei einer Ausbildung des Riegels als Schwenkriegel mit einer in Fahrzeugquerrichtung verlaufenden Schwenkachse mit einem davon nach oben verlaufenden Riegelhebelteil und einer endseitig am Riegelhebelteil nach vorne abstehenden Riegelnase mit nach oben weisender Einführschräge. Das Tastelement kann dabei einfach in der Art eines Pilzes ausgeführt werden, mit einem Pilzknopf als Druckknopf und einem Pilzfuß als Stößel. Der Stößel ist etwas oberhalb der Schwenkachse auf das Riegelhebelteil gerichtet.

Bei montierter Persenning liegen im Bereich des Verriegelungszapfens und/oder der Verriegelungseinrichtung gegenüber einer unmontierten Persenning andere, genau definierte Bauteilstellungen vor, aus denen eine korrekte Montage der Persenning ableitbar ist. Mit Anspruch 6 wird daher eine entsprechende elektrische Sensorabfrage, vorzugsweise durch einfache Endschalter, vorgeschlagen. Diese Abfrage kann sowohl für eine Fernanzeige der korrekten Persenningmontage als auch für eine Abschaltung einer elektromotorischen Verdeckbetätigung bei montierter Persenning verwendet werden. Damit wird ausgeschlossen, daß versehentlich das geöffnete Verdeck elektromotorisch in Richtung seiner Geschlossenstellung betätigt wird und dadurch die Gefahr einer Beschädigung des Elektroantriebs, des Verdecks oder der Persenning, besteht.

In einer besonders bevorzugten Ausführungsform nach Anspruch 7 besteht die Persenning aus einem steifen, formstabilen Material, ggfs. mit mehreren klappbaren Persenningteilen. Besonders bei einem solchen formstabilen Material ist eine Anbindung eines Verriegelungszapfens einfach und stabil durchführbar. Weiter ist nach Anspruch 8 eine stabile Halterung der Persenning zusätzlich zu den Verriegelungseinrichtungen durch davon beabstandete Einsteckverbindungen zwischen Fahrzeugaufbau und Persenning herstellbar, so daß insbesondere eine Kombination einer formstabilen Persenning mit den angegebenen Verriegelungseinrichtungen im B-Säulenbereich und davon beabstandeten Einsteckverbindungen eine besonders einfache Handhabung bei stabilem Halt gewährleistet.

Anhand einer Zeichnung wird die Erfindung näher erläutert.

Es zeigen:
- Fig. 1: eine schematische, perspektivische Draufsicht auf einen Teilbereich einer abnehmbaren Persenning für ein Cabriolet-Fahrzeug, und
- Fig. 2: eine schematische Schnittansicht entlang der Linie A-A der Fig. 1.

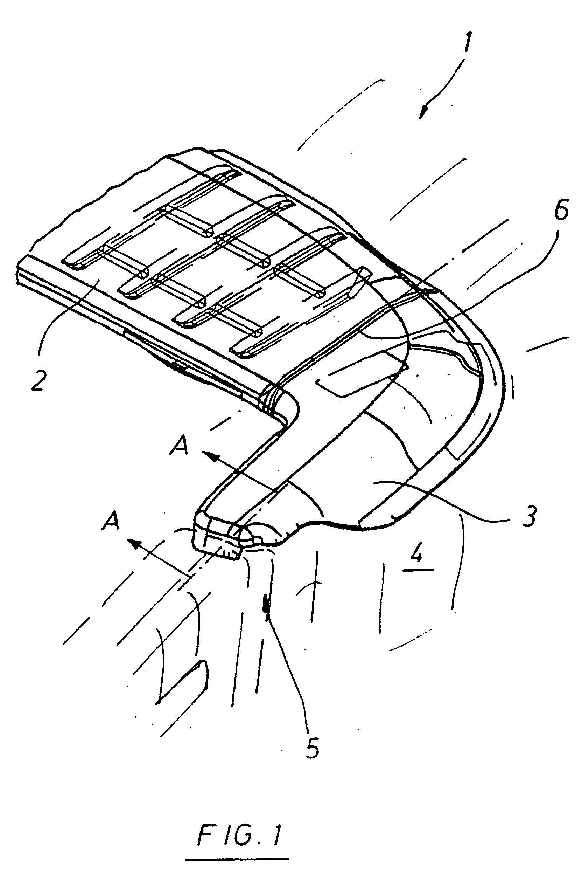

In der Fig. 1 ist schematisch eine perspektivische Draufsicht auf eine abnehmbare Persenning 1 als Verdeckhülle zur Abdeckung eines geöffneten Cabrioletdachs dargestellt. Die Persenning 1 ist insgesamt in etwa U-förmig ausgebildet, mit einem Mittelteil 2 für eine Querabdeckung des geöffneten Cabrioletdachs in einem Heckbereich und mit beidseitig als U-Schenkel nach vorne gerichteten Seitenteilen 3, von denen in der Darstellung der Fig. 1 lediglich eines dargestellt ist. Die Seitenteile 3 decken jeweils einen Seitenbereich 4 des Cabriolet-Fahrzeugs bis über eine auf Fensterbrüstungshöhe verkürzte B-Säule 5 ab.

Die Persenning 1 ist aus einem steifen, formstabilen Material hergestellt, wobei die Seitenteile 3 relativ zu dem Mittelteil 2 klappbar sind. Damit kann die abgenommene Persenning 1 zum Mitführen im Fahrzeug, z.B. im Kofferraum, verstaut werden.

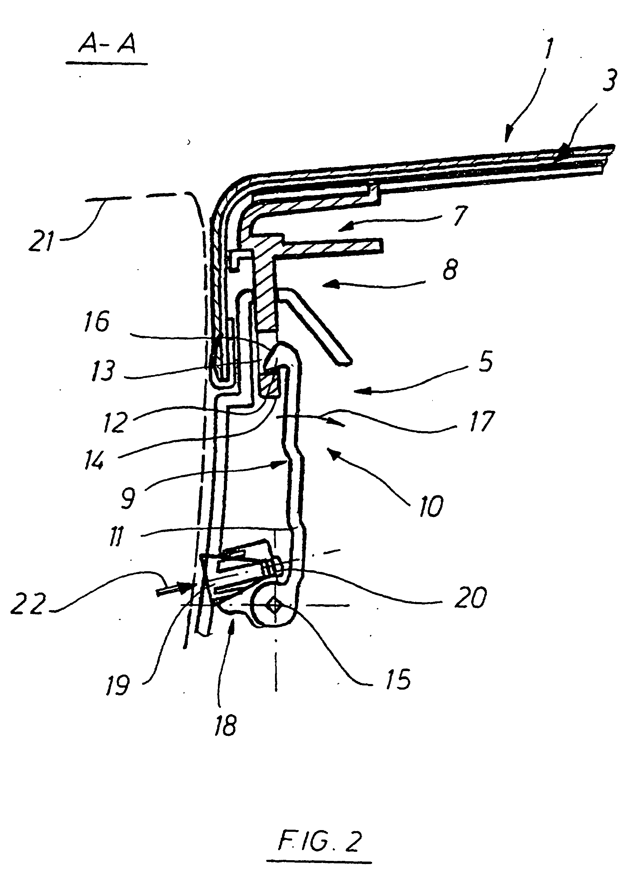

Zur Verriegelung der Persenning 1 im montierten Zustand ist jeweils im vorderen Bereich der Seitenteile 3 der Persenning, wie dies aus der Fig. 2 ersichtlich ist, ein nach unten abstehender Verriegelungszapfen 7 angebracht. Dieser Verriegelungszapfen 7 wird zur Verriegelung der Persenning 1 in eine B-Säulenausnehmung 8 eingeführt, wobei ein Schwenkriegel 9 einer Verriegelungseinrichtung 10 mit einer endseitig von einem Riegelhebel 11 des Schwenkriegels 9 nach vorne abstehenden Riegelnase 12 in einen als Fallenprofil ausgebildeten Durchbruch 13 des Verriegelungszapfens 7 einrastet.

Wie dies aus der Fig. 2 weiter ersichtlich ist, weist der Durchbruch 13 eine Abstützkante 14 für eine Abstützung der Riegelnase 12 entgegen der Auszugrichtung des Verriegelungszapfens 7 auf.

Der Schwenkriegel 9 ist im Bereich der B-Säule 5 um eine in Fahrzeugquerrichtung verlaufende Schwenkachse 15 schwenkbar gelagert. In der in Fig. 2 dargestellten Geschlossenstellung ist der Schwenkriegel 9 federvorgespannt, z.B. mittels einer herkömmlichen Druckfeder, was hier allerdings nicht dargestellt ist.

Der Fig. 2 kann weiter entnommen werden, daß an der Riegelnase 12 eine nach oben weisende Einführschräge 16 ausgebildet ist, so daß bei einer Einführung des Verriegelungszapfens 7 in die B-Säulenausnehmung 8 eine Unterkante des Verriegelungszapfens 7 entlang der Einführschräge 16 geführt wird, wodurch der Schwenkriegel 9 zuerst entgegen der Federvorspannung in Richtung des Pfeiles 17 nach hinten verschwenkt wird und anschließend mit zunehmender Einschubtiefe des Verriegelungszapfens 7, wenn sich der Durchbruch 13 in etwa auf Höhe der Riegelnase 12 befindet, diese in den Durchbruch 13 selbsttätig einrastet.

Für eine Lösung der Verriegelung zwischen dem Verriegelungszapfen 7 und dem Schwenkriegel 9 ist ferner in der B-Säule 5 ein federvorgespanntes Tastelement 18 als von Hand betätigbares Betätigungselement vorgesehen. Dieses Tastelement 18 ist pilzartig mit einem Pilzkopf als Druckknopf 19 und einem Pilzfuß als Stößel 20 ausgebildet, wobei der Stößel 20 in einem Bereich oberhalb der Schwenkachse 15 auf das Riegelhebelteil 11 gerichtet ist. Das federvorgespannte Tastelement 18 ist, wie dies in der Fig. 2 strichliert eingezeichnet ist, bei geschlossener Fahrzeugtür 21 für eine Betätigung nicht zugänglich. Dadurch kann die Persenning 1 nur bei geöffneter Fahrzeugtür 21 durch Lösen der Verriegelungseinrichtung 10 abgenommen werden.

Zum Lösen der Persenningverriegelung wird von Hand ein Druck in Richtung des Pfeils 22 auf den Druckknopf 19 des Tastelements 18 ausgeübt, wodurch der Stößel 20 in Anlage an das Riegelhebelteil 11 gelangt und dieses entgegen der Federvorspannung des Schwenkriegels 9 in Richtung des Pfeils 17 nach hinten verschwenkt, so daß die Riegelnase 12 des Schwenkriegels 9 außer Eingriff mit dem Verriegelungszapfen 7 gelangt. In dieser Stellung kann die Persenning 1 von dem Fahrzeug abgenommen und z.B. im Kofferraum verstaut werden.

## Patentansprüche

1. Cabriolet-Fahrzeug mit abnehmbarer Persenning als Verdeckhülle zur Abdeckung eines geöffneten Cabrioletdachs,
mit einer etwa U-förmigen Persenningausführung, bestehend aus einem Mittelteil für eine Querabdeckung des geöffneten Cabrioletdachs in einem Heckbereich und mit beidseitig als U-Schenkel nach vorne gerichteten Seitenteilen, die jeweils einen Seitenbereich bis über eine auf Fensterbrüstungshöhe verkürzte B-Säule abdecken, und
mit persenningseitigen Halteelementen und zugeordneten, karosserieseitigen Halteelementen für eine lösbare Verbindung der Persenning in deren Funktionsstellung mit dem Fahrzeugaufbau,
**dadurch gekennzeichnet,**
**daß** jeweils im vorderen Bereich der Seitenteile (3), der im montierten Zustand der Persenning (1) die zugeordnete, verkürzte B-Säule (5) abdeckt, ein nach unten abstehender Verriegelungszapfen (7) angebracht ist,
**daß** an der Oberseite der B-Säule (5) eine Ausnehmung (8) zur Einführung des Verriegelungszapfens (7) vorgesehen ist, und
**daß** in der B-Säule (5) eine durch ein Betätigungselement (18) von Hand steuerbare Verriegelungseinrichtung (10) zur lösbaren Verriegelung des eingeführten Verriegelungszapfens (7) enthalten ist, und das Betätigungselement (18) an der durch eine geschlossene Fahrzeugtür (21) abgedeckten Türausschnitt-Innenwange der B-Säule (5) angeordnet ist.

2. Cabriolet-Fahrzeug nach Anspruch 1, **dadurch gekennzeichnet, daß** der Verriegelungszapfen (7) ein Fallenprofil (13), vorzugsweise einen Durchbruch zum Eingriff einer Riegelnase (12) eines Riegels (9) der Verriegelungseinrichtung (10) enthält und das Fallenprofil (13) eine Abstützkante (14) für eine Abstützung der Riegelnase (12) entgegen der Auszugrichtung des Verriegelungszapfens (7) aufweist.

3. Cabriolet-Fahrzeug nach Anspruch 2, **dadurch gekennzeichnet, daß** der Riegel (7) in seine Geschlossenstellung federvorgespannt ist und der Riegelnase (12) eine in Einführrichtung des Verriegelungszapfens (7) weisende Einführschräge (16) zugeordnet ist, so daß bei einer Einführung des Verriegelungszapfens (7) in die B-Säulenausnehmung (8) die Verriegelungseinrichtung (10) nach Erreichen der Endstellung des Verriegelungszapfens (7) selbsttätig verriegelt.

4. Cabriolet-Fahrzeug nach Anspruch 3, **dadurch gekennzeichnet, daß** das Betätigungselement (18) ein federvorgespanntes Tastelement mit einem Druckknopf (19) und einem angeschlossenen Stößel (20) ist, und bei einer Druckknopfbetätigung der Riegel (9) durch den Stößel (20) in seine Entriegelungsposition überführbar ist.

5. Cabriolet-Fahrzeug nach Anspruch 4, **dadurch gekennzeichnet,**
**daß** der Riegel (9) als Schwenkriegel ausgebildet ist, mit einer in Fahrzeugquerrichtung verlaufenden Schwenkachse (15), mit einem davon nach oben verlaufenden Riegelhebelteil (11) und einer endseitig am Riegelhebelteil (11) nach vorne abstehenden Riegelnase (12) mit nach oben weisender Einführschräge (16), und
**daß** das Tastelement (18) pilzartig mit einem Pilzkopf als Druckknopf (19) und einem Pilzfuß als Stößel (20) ausgebildet ist, welcher im Bereich etwas oberhalb der Schwenkachse (15) auf das Riegelhebelteil (11) gerichtet ist.

6. Cabriolet-Fahrzeug nach einem der Ansprüche 1 bis 5, **dadurch gekennzeichnet, daß** durch eine elektrische Sensorabfrage, vorzugsweise durch einen Endschalter die Stellung des eingeführten Verriegelungzapfens (7) und/oder die Stellung der Verriegelungseinrichtungen (10) für eine korrekte Montage der Persenning (1) erkennbar ist und/oder bei montierter Persenning (1) eine elektromotorische Verdeckbetätigung ausgeschaltet ist.

7. Cabriolet-Fahrzeug nach einem der Ansprüche 1 bis 6, **dadurch gekennzeichnet, daß** die Persenning (1) aus einem steifen, formstabilen Material, ggfs. mit mehreren klappbaren Persenningteilen, hergestellt ist.

8. Cabriolet-Fahrzeug nach Anspruch 7, **dadurch gekennzeichnet, daß** an der Persenning (1) zusätzlich zu den Verriegelungseinrichtungen (10) und von diesen beabstandet Einsteckverbindungen zwischen Fahrzeugaufbau und Persenning (1) vorgesehen sind.

## Claims

1. Convertible vehicle with a removable tarpaulin as top cover for covering an open convertible roof,
having an approximately U-shaped tarpaulin design, comprising a central part for a transverse covering of the open convertible roof in a rear region and having side parts which are directed forwards on both sides as U-limbs and in each case cover a side region to beyond a B-pillar, which is shortened to the height of the window ledge, and
having retaining elements on the tarpaulin and associated retaining elements on the bodywork for a releasable connection of the tarpaulin in its functional position to the vehicle body,
**characterized**
**in that** a downwardly protruding locking pin (7) is fitted in each case in the front region of the side parts (3), which region, in the fitted state of the tarpaulin (1), covers the associated, shortened B-pillar (5),
**in that** a recess (8) for the introduction of the locking pin (7) is provided on the top side of the B-pillar (5), and
**in that** the B-pillar (5) contains a locking device (10) which can be controlled manually by means of an actuating element (18) and is intended for the releasable locking of the locking pin (7) which has been introduced, and the actuating element (18) is arranged on the door-cutout inner cheek of the B-pillar (5) that is covered by a closed vehicle door (21).

2. Convertible vehicle according to Claim 1, **characterized in that** the locking pin (7) has a falling-latch profile (13), preferably an aperture, for the engagement of a latching lug (12) of a latch (9) of the locking device (10), and the falling-latch profile (13) has a supporting edge (14) for supporting the latching lug (12) counter to the pull-out direction of the locking pin (7).

3. Convertible vehicle according to Claim 2, **characterized in that** the latch (7) is spring-prestressed into its closed position and the latching lug (12) is assigned an introducing slope (16) pointing in the introducing direction of the locking pin (7), with the result that, when the locking pin (7) is introduced into the B-pillar recess (8), the locking device (10) automatically locks after reaching the end position of the locking pin (7).

4. Convertible vehicle according to Claim 3, **characterized in that** the actuating element (18) is a spring-prestressed sensing element having a push-button (19) and a connected tappet (20), and, when the push-button is actuated, the latch (9) can be transferred by the tappet (20) into its release position.

5. Convertible vehicle according to Claim 4, **characterized**
**in that** the latch (9) is designed as a pivoting latch, having a pivot axis (15) running in the transverse direction of the vehicle, having a latch lever part (11) running upwards therefrom, and a latching lug (12) protruding forwards on the end side of the latch lever part (11) and having an upwardly pointing introducing slope (16), and
**in that** the sensing element (18) is designed in the manner of a mushroom with a mushroom head as the push-button (19) and a mushroom base as the tappet (20) which, in the region somewhat above the pivot axis (15), is directed towards the latch lever part (11).

6. Convertible vehicle according to one of Claims 1 to 5, **characterized in that** the position of the introduced locking pin (7) and/or the position of the locking devices (10) can be recognized by an electric sensor enquiry, preferably by a limit switch, to check for correct installation of the tarpaulin (1) and/or, when the tarpaulin (1) is fitted, an actuation of the top by electric motor is switched off.

7. Convertible vehicle according to one of Claims 1 to 6, **characterized in that** the tarpaulin (1) is produced from a stiff, dimensionally stable material, if appropriate having a plurality of foldable tarpaulin parts.

8. Convertible vehicle according to Claim 7, **characterized in that** plug-in connections between the vehicle body and tarpaulin (1) are provided on the tarpaulin (1) in addition to the locking devices (10) and spaced apart from the latter.

## Revendications

1. Voiture convertible ou cabriolet équipé d'une bâche amovible pour la couverture du toit pliant d'un toit de cabriolet ouvert,
avec une configuration de bâche à peu près en forme de U, formée d'une partie centrale pour un recouvrement transversal du toit du cabriolet ouvert, dans une zone arrière, et de parties latérales, orientées vers l'avant, de part et d'autre, et réalisées en forme de branches de U, qui couvrent chaque fois une zone latérale jusqu'au-dessus d'une colonne B raccourcie à la hauteur de la balustrade de fenêtre, et
avec des éléments de maintien, côté bâche, et des éléments de maintien, côté carrosserie, associés, pour obtenir une liaison désolidarisable de la bâche à sa position fonctionnelle, à la carrosserie du véhicule,
**caractérisé en ce que**,
chaque fois dans la zone avant des parties latérales (3), qui, lorsque la bâche (1) est à l'état monté, couvre la colonne B (5) raccourcie, associée, est monté un tourillon de verrouillage (7) en saillie vers le bas,
**en ce que**, en face supérieure de la colonne B (5), est prévu un évidement (8) pour l'insertion du tourillon de verrouillage (7) et,
**en ce que**, dans la colonne B (5), est contenu un dispositif de verrouillage (10), pouvant être commandé à la main au moyen d'un élément d'actionnement (18), pour obtenir le verrouillage désolidarisable du tourillon de verrouillage (7) inséré, et l'élément d'actionnement (18) est disposé sur la joue intérieure de découpure de portière, de la colonne B (5), couverte par une portière de véhicule (21) fermée.

2. Voiture convertible ou cabriolet selon la revendication 1, **caractérisé en ce que** le téton de verrouillage (7) contient un profilé formant pêne (13), de préférence un passage pour l'engagement d'un ergot (12) d'un pêne de verrou (8) du dispositif de verrouillage (10), et le profilé formant pêne (13) présente une arête de soutien (14) pour soutenir l'ergot de verrouillage (12), à l'encontre de la direction d'extraction du tourillon de verrouillage (7).

3. Voiture convertible ou cabriolet selon la revendication 2, **caractérisé en ce que** le pêne de verrou (7), à sa position de fermeture, est soumis à la pré-contrainte d'un ressort, et à l'ergot de verrouillage (12) est associée une pente d'insertion (16), tournée dans la direction d'insertion du tourillon de verrouillage (7), de sorte que lors d'une insertion du tourillon de verrouillage (7) dans l'évidement de colonne B (8), le dispositif de verrouillage (10) se verrouille automatiquement, après atteinte de la position finale du tourillon de verrouillage (7).

4. Voiture convertible ou cabriolet selon la revendication 3, **caractérisé en ce que** l'élément d'actionnement (18) est un élément de palpage soumis à une pré-contrainte élastique, avec un bouton de pressage (19) et un poussoir (20) raccordé, et le pêne de verrou (9)est susceptible d'être passé à sa position de déverrouillage au moyen du poussoir (20), lors d'un actionnement du bouton de pressage.

5. Voiture convertible ou cabriolet selon la revendication 4, **caractérisé en ce que** le pêne de verrou (9) est conformé en verrou pivotant, avec un axe de pivotement (15) s'étendant dans la direction transversale du véhicule, avec une partie de levier de verrou (11) s'étendant depuis celui-ci, en direction du haut, et un ergot de verrou (12) en saillie vers l'avant à une extrémité sur la partie de levier de verrou (11), avec une pente d'insertion (16) tournée vers le haut, et
**en ce que** l'élément de palpage (18) est conformé en champignon, avec une tête de champignon faisant office de bouton de pressage (19) et un pied de champignon réalisé sous forme de poussoir (20), orienté dans la zone située un peu au-dessus de l'axe de pivotement (15) sur la partie de levier de verrou (11).

6. Voiture convertible ou cabriolet selon l'une des revendications 1 à 5, **caractérisé en ce que**, grâce à une interrogation électrique par capteur, de préférence au moyen d'un interrupteur de fin de course, la position du tourillon de verrouillage (7) insérée et/ou la position des dispositifs de verrouillage (10) pour un montage correct de la bâche (1) est/sont identifiables et/ou lorsque la bâche (1) est montée, un actionnement par moteur électrique de la capote est passé hors service.

7. Voiture convertible ou cabriolet selon l'une des revendications 1 à 6, **caractérisé en ce que** la bâche (1) est fabriquée à partir d'un matériau rigide, à stabilité de forme, les cas échéant avec plusieurs parties de bâches rabattables.

8. Voiture convertible ou cabriolet selon la revendication 7, **caractérisé en ce que**, sur la bâche (1), sont prévues, en plus des dispositifs de verrouillage (10) et à distance de ceux-ci, des liaisons à enfichage entre la carrosserie du véhicule et la bâche (1).
